# EUROPEAN PATENT SPECIFICATION

(11) **EP 1 747 131 B1**
(45) Date of publication and mention of the grant of the patent: **29.08.2012**
(21) Application number: 05752996.8
(22) Date of filing: 20.05.2005
(51) Int. Cl.: B60T 8/175, B60T 8/24, B60K 28/16, B60T 7/12, B60T 8/48, B60W 10/06, B60W 30/02, B60W 10/184, B60T 8/1755

(54) **COOPERATIVE TRACTION CONTROL SYSTEM**
KOOPERATIVES ANTRIEBSSTEUERUNGSSYSTEM
SYSTEME D'ANTIPATINAGE A L'ACCELERATION COOPERANT

(30) Priority: 20.05.2004 US 572732 P; 15.07.2004 US 588085 P; 08.11.2004 US 983393
(43) Date of publication of application: 31.01.2007
(73) Proprietor: HONDA MOTOR CO., LTD., Tokyo (JP)
(72) Inventor: POST, James, W., II, Honda R & D Americas, Inc., Raymond, OH 43067-9705 (US); KLAUS, Theodore, Honda R & D Americas, Inc., Raymond, OH 43067-9705 (US)
(74) Representative: Cohausz & Florack
(86) International application number: PCT/US2005/017949
(87) International publication number: WO 2005/113308

(56) References cited:
- WO-A-94/04385
- DE-A1- 3 818 511
- DE-A1- 4 321 571
- DE-A1- 19 632 939
- DE-A1- 19 844 467
- DE-A1- 19 949 220
- FR-A- 2 843 079
- GB-A- 2 277 813
- US-A- 5 009 294
- US-A- 5 471 386
- US-B1- 6 450 281

## Description

### FIELD OF THE INVENTION

The present invention relates to a cooperative traction control system for controlling a vehicle having a plurality of wheels, comprising a plurality of vehicle parameter sensors and a controller that receives signals from said vehicle parameter sensors and determines whether any of said wheels are longitudinally slipping or laterally skidding. Moreover the present invention relates to a corresponding method for controlling a vehicle having a plurality of wheels. Such a traction control system and method for controlling a vehicle is for example known from GB 2 277 813 A.

The present invention is directed toward a methodology for independent longitudinal wheel slip and lateral skid control utilizing a traction control and a stability control system in cooperation with a drive torque distribution control system capable of individual wheel drive torque modulation.

### DESCRIPTION OF RELATED ART

A vehicle system may consist of a variety of control actuators (brakes, drive torque distribution, suspension stroke control, tire load control, etc.) capable of modulating the forces at each wheel for the purpose of maintaining traction, achieving vehicle dynamics responses and ensuring vehicle yaw stability. Each actuator is generally driven by it's own, dedicated ECU (electronic control unit) to achieve a specific function. Some actuator ECU's may share status information in order to understand each ECU's operational state, or failure condition.

In the area of traction control leading to stable vehicle response, vehicle stability assist systems or traction control systems usually are based on brake technology and command changes in total system drive torque through engine control (changes in engine torque) and modulation at each individual wheel by brake torque application. In this manner it is possible for the Traction Control System (TCS) or Vehicle Stability Assist (VSA) controller to limit the overall wheel slip and/or lateral skid and to achieve a stable vehicle response.

However, since the control of the total drive torque, as modulated by engine torque control, is not directly related to each wheel's drive torque condition (i. e. an engine torque change affects the overall torque but not specifically an individual wheel drive torque), it has limited effectiveness in terms of simultaneously keeping vehicle momentum and allowing a stable vehicle response while controlling wheel slip and/or lateral skid of an individual wheel.

The TCS and/or VSA controller is usually designed to operate in a slip- based and/or lateral skid-based feedback manner and is usually designed and implemented with high fidelity for this purpose. However, it does not, in the current state of the art, have the capability to modulate individual tractive torques at each wheel through changes in drive torque distribution of the driveline.

The TCS and/or VSA controller, in the current state of the art, has the capability to:
- Calculate a reference vehicle speed;
- Calculate each wheel's traction condition (either longitudinal slip rate or lateral skid);
- Compare to a threshold speed and/or longitudinal slip and/or lateral skid;
- Judge the proximity to a potentially unstable vehicle motion; and
- Calculate a required application torque (usually brake) to control wheel spin and/or wheel lateral skid and/or vehicle motion.

It has been found that the conventional TCS or VSA operation has limited ability to respond to operation on low coefficient surfaces during turning and hard acceleration. During vehicle launch on low coefficient surfaces and while turning in particular, there is a higher likelihood of loss of traction and potentially ensuing loss of yaw stability and/or vehicle maneuverability.

In these types of events, the current state of the art in traction control systems reduces engine torque in addition to applying brakes to the slipping and/or laterally skidding wheel (s) control the vehicle motions, wheel slips and lateral skids. This usually results in a hesitation to the overall vehicle momentum because the amount of engine torque reduction required to reduce the most critical wheel slip and/or lateral skid also reduces the amount of tractive effort on other wheels that may not be in an excessive slip and/or lateral skid situation and may even have additional traction capability. This hesitation may, in some cases, be detrimental and could lead to problems in some situations, such as hill climbing or operation in tightly confined spaces where acceleration is requested but not delivered due to this hesitation.

Therefore, there exists a need in the art for an improved traction control type system, wherein reduction in engine torque is prevented, if possible, or delayed, and wherein drive torque provided to a slipping and/or laterally skidding wheel is reduced, so as to better match the traction conditions being experienced by the vehicle, thereby providing better handling, especially during low speed, tight turn acceleration on low coefficient of friction surfaces.

### SUMMARY OF THE INVENTION

It is therefore an object of the present invention to provide and advanced traction control system.

This object is achieved by the subject-matter of claim 1 and independent claim 15. Embodiments are defined in the subclaims.

The present invention is directed toward a cooperative traction control system wherein the drive torque applied to the wheels is individually controlled or modulated to react to sensed wheel-slipping conditions and/or sensed wheel lateral skidding, so as to provide better handling and vehicle response, especially during low speed, tight-turn acceleration on surfaces having a relatively low coefficient of friction.

According to the present invention, individual control of a vehicle's wheel slip and/or lateral skid or potential wheel slip and/or lateral skid is provided by using the combination of an existing TCS control module and/or an existing VSA control module linked with a drive torque actuator capable of modulating the amount of drive torque at a given wheel on a specified axle.

The system according to the present invention includes a group of vehicle parameter sensors including wheel speed sensors for each wheel and vehicle motion sensors (including but not limited to yaw rate sensors, lateral acceleration sensors, longitudinal acceleration sensors, and steering angle sensors). The system also includes a controllable suspension including load sensing capabilities, a traction control system electronic control unit (hereinafter TCS ECU) a vehicle stability system electronic control unit (hereinafter VSA ECU) used in combination with or as an alternative to the TCS ECU, a drive torque actuator associated with each of the wheels, a drive torque controller electronic control unit (hereinafter drive torque ECU), and an engine electronic control unit (hereinafter engine ECU) that is operable to control operation of the engine, namely the throttle angle, to affect engine output torque. The TCS ECU, VSA ECU, drive torque ECU, and engine ECU preferably are in electrical communication with one another via a communications bus.

The cooperative traction control system is described below in the alternative, utilizing either a TCS ECU alone to remedy longitudinal wheel slip conditions or a VSA ECU alone to remedy lateral skid and other vehicle instability conditions or in a third configuration, that is a preferred configuration, utilizing both the TCS ECU and VSA ECU together.

The TCS ECU and VSA ECU receive signals from the wheel speed sensors and from other vehicle parameter sensors in the vehicle and determine, based upon predetermined control algorithms, whether one or more of the wheels is either slipping and/or skidding laterally (feedback-based control) or about to slip and/or skid laterally (feed-forward based control) or if the vehicle is progressing into a region of unstable motion. The TCS ECU and/or VSA ECU calculate the necessary wheel brake torque (or actuation force), the necessary throttle angle adjustment, and the necessary drive torque reduction amount for the slipping and/or laterally skidding wheel(s).

The TCS ECU and/or VSA ECU is in communication with the brakes for each wheel, and with the drive torque ECU and the engine ECU. The drive torque ECU is in communication with the individual drive torque actuators. In accordance with the present invention, there are several ways to implement the improved cooperative traction control made possible by independently controlling the individual drive torques for each of the wheels.

In a second embodiment of the present invention, the controllable suspension and associated load sensors are used to determine potential wheel slippage and/or lateral skid while in a primary or first embodiment, the controllable suspension is not present.

In a first method of the first preferred embodiment of the present invention, the cooperative traction control system provides a staged or sequential control wherein, when it is determined that a wheel is slipping or skidding laterally or the vehicle is progressing into a region of unstable motion, the TCS ECU and/or VSA ECU communicates the necessary drive torque reduction amount to the drive torque ECU, which, in turn, activates the associated drive torque actuator for the slipping and/or laterally skidding wheel to reduce the drive torque applied to the slipping and/or laterally skidding wheel. Should it be determined that the subject wheel continues to slip and/or skid laterally or that the vehicle continues to progress into a region of unstable motion, then the TCS ECU and/or VSA ECU modulates or activates the brakes at each wheel, further reducing the wheel speed. Should it be determined that the subject wheel continues to slip and/or skid laterally or that the vehicle continues to progress into a region of unstable motion, then the TCS ECU and/or VSA ECU communicates a throttle angle change request to the engine ECU, which adjusts the throttle angle to produce the desired torque output reduction.

In a second method of the first preferred embodiment of the present invention, the cooperative traction control system provides a staged or sequential control wherein, when it is determined that a wheel is slipping and/or skidding laterally or the vehicle is progressing into a region of unstable motion, the TCS ECU and/or VSA ECU communicates the necessary drive torque reduction amount to the drive torque ECU, which, in turn, activates the associated drive torque actuator for the slipping and/or laterally skidding wheel to reduce the drive torque applied to the slipping and/or laterally skidding wheel. Should it be determined that the subject wheel continues to slip or skid laterally or that the vehicle continues to progress into a region of unstable motion, then the TCS ECU and/or VSA ECU communicates a throttle angle change request to the engine ECU, which adjusts the throttle angle to produce the desired torque output reduction. Should it be determined that the subject wheel continues to slip and/or skid laterally or the vehicle continues to progress into a region of unstable motion, then the TCS ECU and/or VSA ECU modulates or activates the brakes at each wheel, further reducing the wheel speed.

In further accordance with the present invention, a third method of the first preferred embodiment for controlling the cooperative traction control system is provided wherein the severity of wheel slip and/or lateral skid and/or progression of the vehicle into a region of unstable motion is determined by the TCS ECU and/or VSA ECU and the remedial measures undertaken correspond to the anticipated magnitude of the wheel slippage and/or lateral skid and/or vehicle motion. For example, should it be determined that a very severe wheel slip and/or lateral skid and/or progression into an unstable region of vehicle motion has occurred or is about to occur, the TCS ECU and/or VSA ECU will respond by simultaneously: activating the associated drive torque actuator (via the drive torque ECU), reducing the engine output torque (by sending a throttle angle change request to the engine ECU), and applying or modulating the brakes on each of the wheels. Should a relatively less severe slipping and/or laterally skidding condition and/or progression of the vehicle into a region of unstable vehicle motion be experienced or anticipated by the TCS ECU and/or VSA ECU, the remedial measures may be correspondingly reduced.

For example, in a moderate sensed or anticipated slipping and/or laterally skidding and/or unstable vehicle situation, the TCS ECU and/or VSA ECU may respond by simultaneously: activating the associated drive torque actuator (via the drive torque ECU), and applying or modulating the brakes on each of the wheels. In this way, for less severe sensed or anticipated wheel slipping and/or laterally skidding and/or unstable vehicle situations, the engine output torque is maintained, which permits the vehicle handling and speed to be maintained or restored quickly when the slipping and/or laterally skidding and/or unstable vehicle conditions are removed. Also, should a minor slipping and/or laterally skidding and/or unstable vehicle condition be experienced or anticipated, then the TCS ECU and/or VSA ECU may respond by only activating the associated drive torque actuator via the drive torque ECU. In many cases, this reduction in drive torque at only the slipping and/or laterally ,skidding wheel will alleviate the slipping and/or laterally skidding and/or unstable vehicle motion problem before a more severe slipping and/or laterally skidding and/or unstable vehicle condition is experienced and without detrimentally affecting the performance of the vehicle.

### BRIEF DESCRIPTION OF THE DRAWINGS

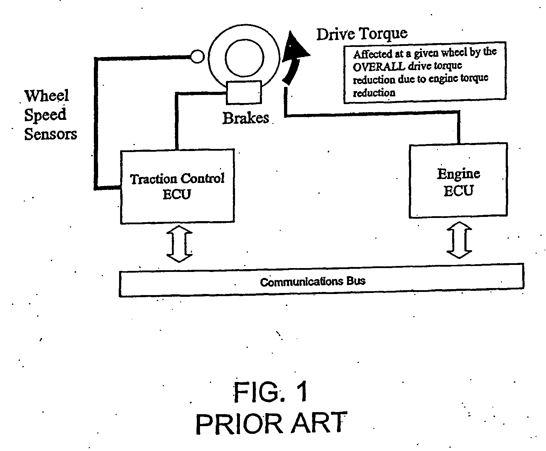

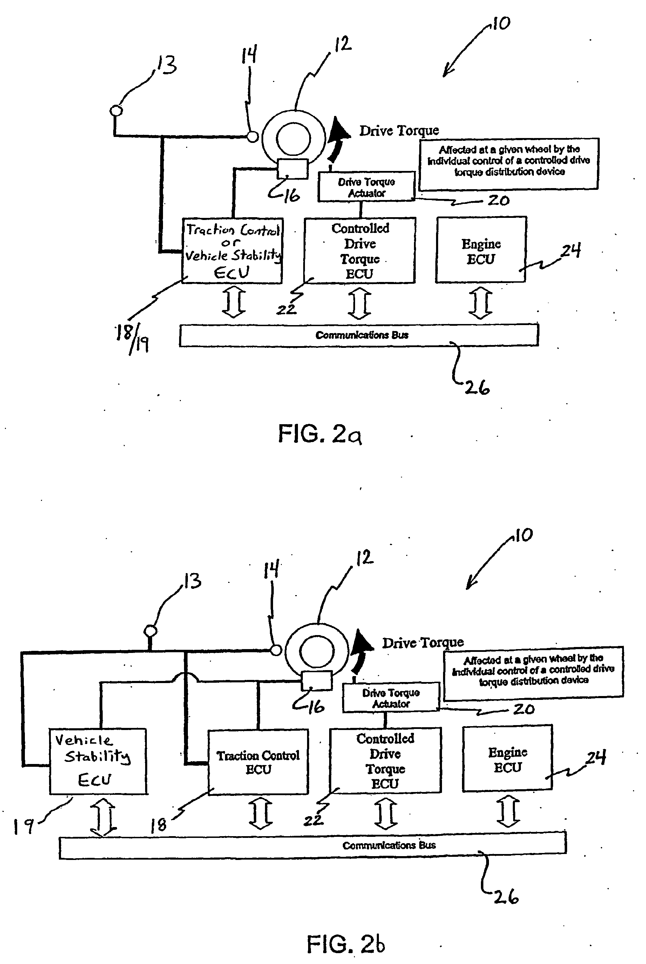

These and further features of the invention will be apparent with reference to the following description and drawings, wherein: [0021] Fig. 1 is a schematic representation of a conventional traction control system; and, [0022] Fig. 2a is a schematic representation of a cooperative traction control system according to a first embodiment of the present invention; [0023] Fig. 2b is a schematic representation of a cooperative traction control system according to an alternate first embodiment of the present invention;

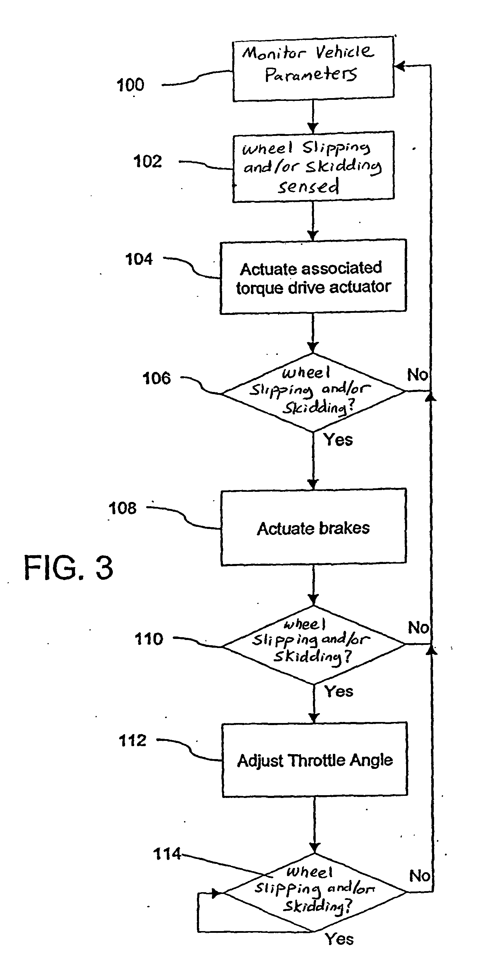

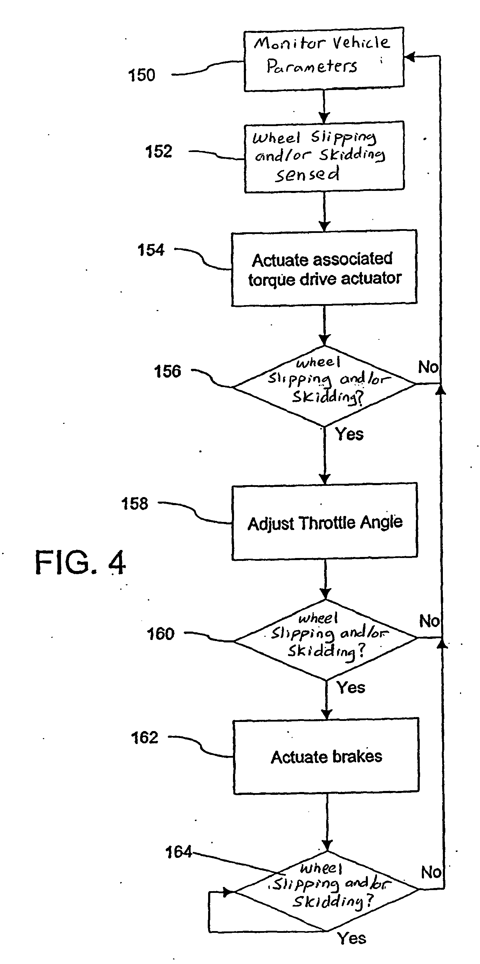

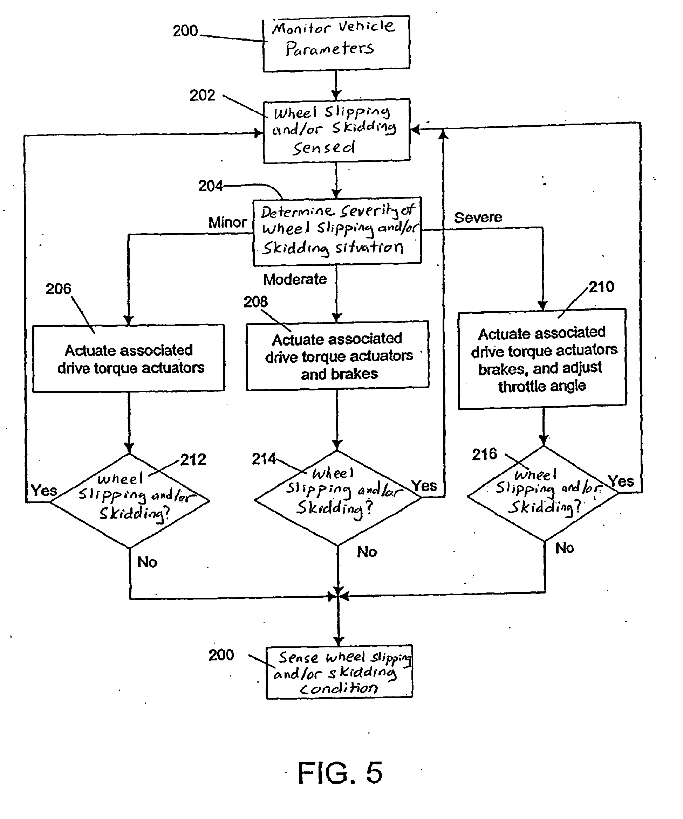

Fig. 3 is a flow chart illustrating operational steps of a first method according to the first embodiments of the present invention; [0025] Fig. 4 is a flow chart illustrating operational steps according to a second method according the first embodiments of the present invention; [0026] Fig. 5 is a flow chart illustrating operational steps according to a third method of the first embodiments of the present invention.

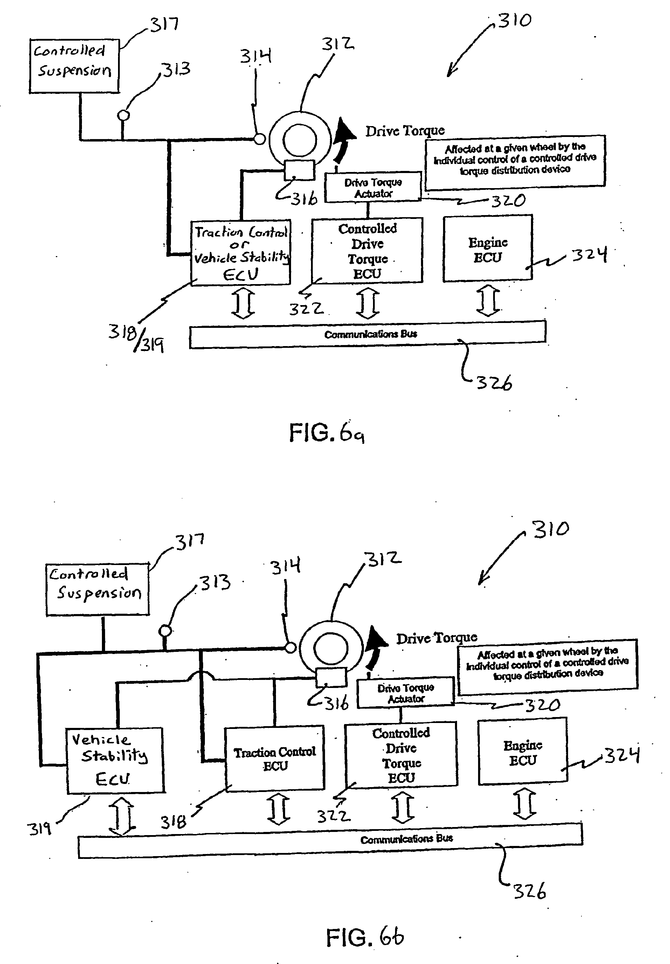

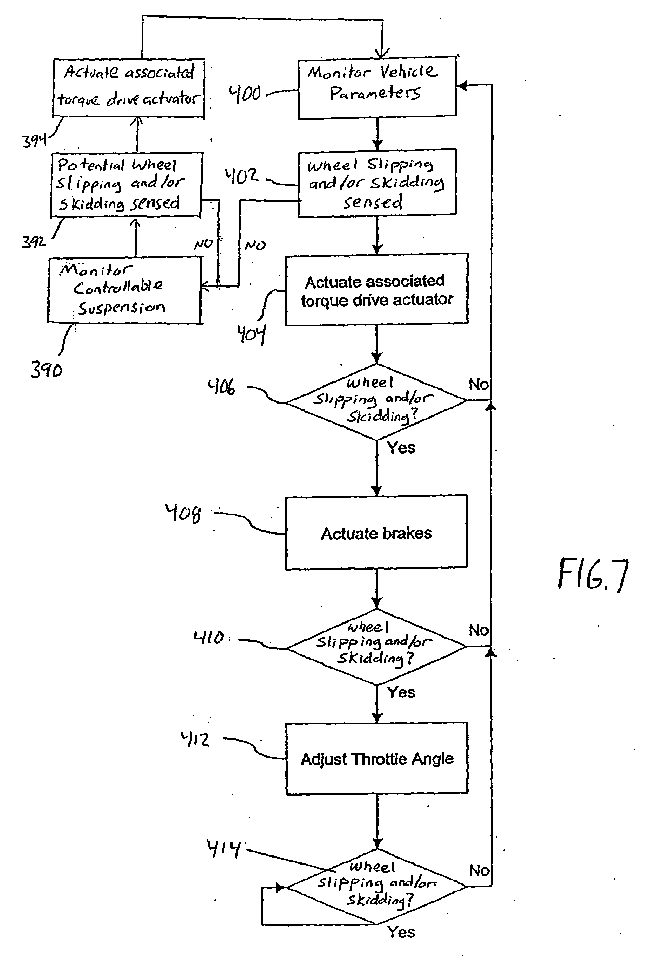

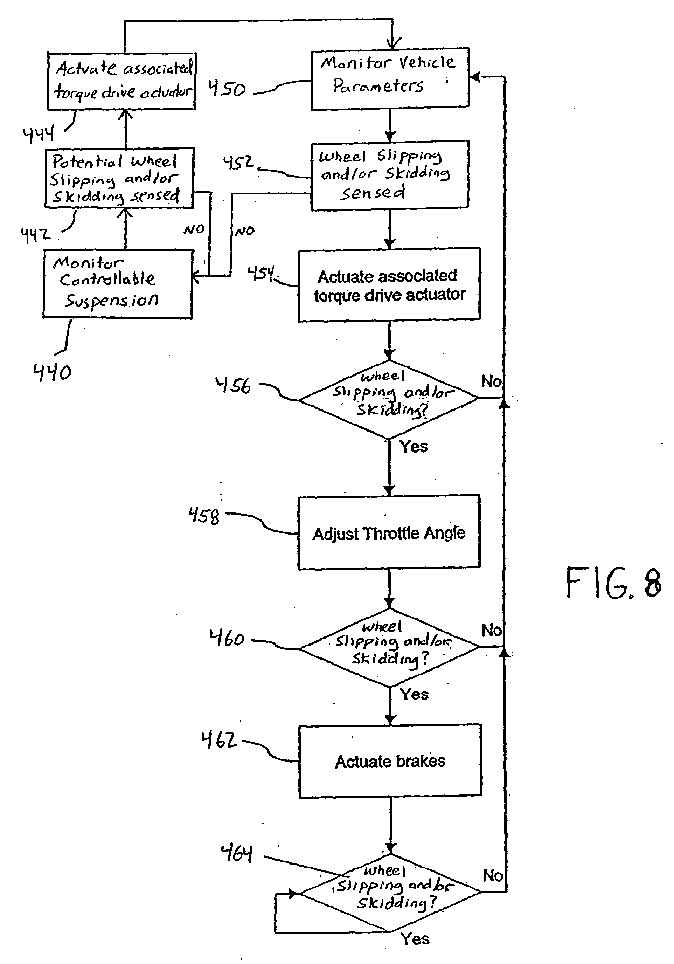

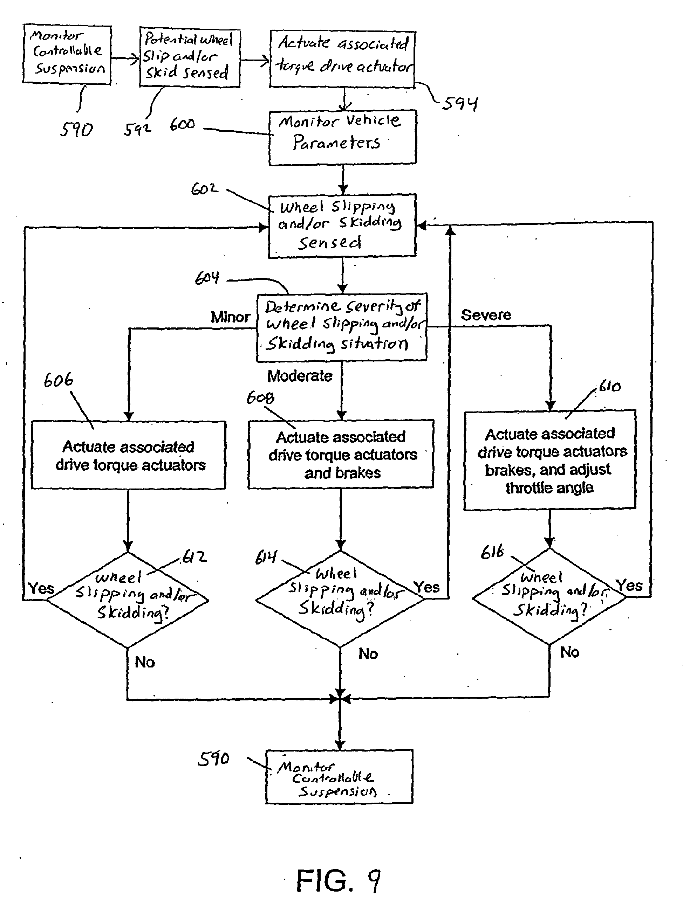

Fig. 6a is a schematic representation of a cooperative traction control system according to a second embodiment of the present invention; [0028] Fig. 6b is a schematic representation of a cooperative traction control system according to an alternate second embodiment of the present invention; [0029] Fig. 7 is a flow chart illustrating operational steps of a first method according to the second embodiments of the present invention; [0030] Fig. 8 is a flow chart illustrating operational steps according to a second method according the second embodiments of the present invention; and [0031] Fig. 9 is a flow chart illustrating operational steps according to a third method of the second embodiments of the present invention.

### DETAILED DESCRIPTION OF THE PREFERRED EMBODIMENTS

This invention combines the basic functions of a feed-forward drive torque actuator with the control of a slip-based and/or lateral skid-based and/or vehicle motion-based feed-back brake and throttle control system. According to the present invention, the cooperative traction control system now is capable of requesting drive torque changes at each wheel via a controlled drive torque actuator.

With reference to Figs. 2a and 2b, a cooperative traction control system 10 according to the present invention is illustrated. The cooperative traction control system 10 is installed on a vehicle having a plurality of wheels 12 and includes vehicle parameter sensors comprising wheel speed sensors 14, and/or vehicle motion sensors 13 (vehicle motion sensors including but not limited to yaw rate, lateral acceleration, longitudinal acceleration, steering angle). The cooperative traction control system also includes brakes 16 associated with each wheel 12, a TCS ECU 18, a VSA ECU 19 used in combination with (Fig. 2b) or as an alternative to (Fig. 2a) the TCS ECU 18 a drive torque actuator 20 associated with each of the wheels 12, a drive torque ECU 22, an engine ECU 24, and a communications bus 26.

The TCS ECU 18 and/or VSA ECU 19 is in communication with the brakes 16 of each wheel 12 (i. e., the brake actuators), and with the drive torque ECU 22 and the engine ECU 24 via the communications bus 26, as illustrated.

The TCS ECU 18 and/or VSA ECU 19 receives signals from the wheel speed sensors 14 and/or vehicle motion sensors 13, and uses these signals to determine wheel speed changes and vehicle motions. The wheel speed changes and vehicle motions are compared to stability operational boundaries in the TCS ECU 18 and/or VSA ECU 19 to determine whether one or more wheels 12 are slipping and/or skidding laterally, or about to slip and/or skid laterally and/or whether the vehicle is progressing into a region of unstable motion, and whether the actual or anticipated wheel slip and/or lateral skid needs to be reduced. It is noted that many algorithms are known in the art to qualify and quantify wheel slip and/or lateral skid and/or stable vehicle motion and that many of these known algorithms may be used by the TCS ECU 18 and/or VSA ECU 19.

The TCS ECU 18 and/or VSA ECU 19 uses the wheel slip and/or lateral skid and/or vehicle motion information either alone or in combination with other sensed conditions (i. e., steering angle, temperature, pitch/yaw) to calculate control signals that may be used to control operation of the vehicle drive/brake systems to correct the wheel slip and/or lateral wheel skid and/or vehicle motion, as described hereinafter. More specifically, the TCS ECU 18 and/or VSA ECU 19 calculates: a drive torque reduction amount that may be communicated to the drive torque ECU 22 to control the drive torque actuator (s) a brake torque (braking force) that may be communicated to each of the brakes 16 to modulate/actuate the brakes; and, a throttle angle change request that may be communicated to the engine ECU 24 to control operation of the engine. In this regard it is noted that the condition or position of the throttle is communicated from the engine ECU 24 to the TCS ECU 18 and/or VSA ECU 19 via the communications bus 26, and that the condition of the individual∼drive∼torque..actuators 20 is communicated from the drive torque ECU 22 to the TCS ECU 18 and/or VSA ECU 19.

The drive torque ECU 22 receives drive torque reduction signals from the TCS ECU 18 and/or VSA ECU 19 and controls operation of the individual drive torque actuators 20. The drive torque actuators 20 are generally designed and intended to achieve an appropriate level of drive torque for each wheel 12 as required by the prevailing vehicle condition, and may have their own feed-forward and feed-back control. However, as surface, loading, speed and other vehicle conditions change, there is an opportunity to have individual wheel slip and/or lateral skid that leads to loss of traction and/or even loss of vehicle stability or maneuverability. Therefore, control over the individual drive torque actuators 20 via the TCS ECU 18 and/or VSA ECU 19 and the drive torque ECU 22 is preferably employed, as should be apparent from the present discussion.

The engine ECU 24 is adapted to control or adjust the throttle and thereby affects the engine output torque. The engine ECU 24 receives the throttle angle change request signals from the TCS ECU 18 and/or VSA ECU 19 and implements adjustments to the throttle angle, and communicates the throttle angle status to the TCS ECU 18 and/or VSA ECU 19.

With reference to Fig. 3, a flow chart illustrating a first preferred method of operating the first embodiment of the cooperative traction control system 10 according to the present invention is provided. In this embodiment the cooperative traction control system provides a staged actuation of control systems to reduce wheel slip and/or lateral skid, as necessary.

In step 100, the wheels and vehicle motions are monitored and, in step 102, it is determined that a wheel is slipping and/or skidding laterally and/or the vehicle is progressing into or operating in a region of unstable motion. Thereafter, in step 104, the TCS ECU 18 and/or VSA ECU 19 communicates the necessary drive torque reduction amount to the drive torque ECU 22, which, in turn, activates the associated drive torque actuator 20 for the slipping and/or laterally skidding wheel to reduce the drive torque applied to the slipping and/or laterally skidding wheel. The slipping and/or lateral skidding condition of the wheels is sensed (step 106) and, should it be determined that the subject wheel continues to slip and/or skid laterally or that the vehicle continues to progress into or operate in a region of unstable motion, then the TCS ECU 18 and/or VSA ECU 19 modulates or activates the brakes 16 at each wheel 12 (step 108), further reducing the wheel speed. The wheel slipping and/or laterally skidding and/or vehicle motion condition is further sensed (step 110) and, should it be determined that the subject wheel continues to slip and/or skid laterally or that the vehicle continues to progress into or operate in a region of unstable motion, then the TCS ECU 18 and/or VSA ECU 19 communicates the throttle angle change request to the engine ECU 24, which adjusts the throttle angle to reduce the engine torque output (step 112). The slipping and/or lateral skid and/or vehicle motion condition is further monitored (step 114) and the control is applied until excessive slipping and/or lateral skid and/or undesirable vehicle motion is no longer sensed or anticipated.

With reference to Fig. 4, a flow chart illustrating a second preferred method of operating the cooperative traction control system 10 according to a first embodiment of the present invention is provided. This embodiment is similar to the embodiment of Fig. 3, but reverses the order of the sequential application of remedial measures, as will be apparent from the following discussion.

In step 150, the wheels and vehicle motions are monitored and, in step 152 it is determined that a wheel is slipping and/or skidding laterally and/or the vehicle is progressing into or operating in a region of unstable motion. Thereafter, in step 154, the TCS ECU 18 and/or VSA ECU 19 communicates the necessary drive torque reduction amount to the drive torque ECU 22, which, in turn, activates the associated drive torque actuator 20 for the slipping and/or laterally skidding wheel to reduce the drive torque applied to the slipping and/or laterally skidding wheel. The wheel slipping and/or lateral skid and/or vehicle motion condition is further sensed (step 156) and, should it be determined that the subject wheel continues to slip and/or skid laterally or the vehicle continues to progress into or operate in a region of unstable motion, then the TCS ECU 18 and/or VSA ECU 19 communicates the throttle angle change request to the engine ECU 24, which adjusts the throttle angle to reduce the engine torque output (step 158). The slipping and/or lateral skid condition of the wheels is sensed (step 160) and, should it be determined that the subject wheel continues to slip and/or skid laterally and/or the vehicle continues to progress into or operate in a region of unstable motion, then the TCS ECU 18 and/or VSA ECU 19 modulates or activates the brakes 16 at each wheel 12 (step 162), further reducing the wheel speed. The slipping and/or lateral skid and/or vehicle motion condition is further monitored (step 164) and the control is applied until excessive slipping and/or lateral skid and/or undesirable vehicle motion is no longer sensed or anticipated.

With reference to Fig. 5, a flow chart illustrating another preferred method of operating the cooperative traction control system 10 according to a first embodiment of the present invention is provided. In this embodiment, the cooperative traction control system 10 provides remedial measures based upon the sensed or calculated severity of the wheel slippage and/or lateral skid and/or undesirable vehicle motion.

In step 200, the wheels and/or vehicle motions are monitored and, should wheel slipping and/or lateral skid and/or undesirable vehicle motion be sensed or anticipated (step 202), the TCS ECU 18 and/or VSA ECU 19 determines the severity of the sensed or anticipated wheel slippage and/or lateral skid and/or undesirable vehicle motion (step 204). If the wheel slipping and/or lateral skid and/or vehicle motion situation is determined to be minor in step 204, then the associated drive torque actuator (s) is activated (step 206). If the wheel slipping and/or lateral skid and/or vehicle motion situation is determined to be moderate in step 204, then the associated drive torque actuator (s) and the brakes are simultaneously activated (step 208). If the wheel slipping and/or lateral skid and/or vehicle motion situation is determined to be severe in step 204, then simultaneously the associated drive torque actuators 20 are activated, the brakes are activated, and the throttle angle is adjusted to reduce engine torque output (step 210). Naturally, following any of the remedial steps (steps 206, 208, 210) the wheel slipping and/or lateral skid and/or vehicle motion condition is sensed (steps 212, 214, 216) and, if acceptable slipping and/or lateral skid and/or vehicle motion is occurring or anticipated, the wheel and/or vehicle motion condition is monitored (step 200). If wheel slipping and/or lateral skid and/or progression into or operating in a region of unstable motion continues or is anticipated, the control returns to determine the severity of the slippage and/or lateral skid and/or undesirable vehicle motion so that the appropriate remedial measure can be selected (i. e, which of steps 206,208, 210 is to be implemented).

In this way, for minor or moderate sensed or anticipated wheel slipping and/or lateral skid situations, the engine output torque is maintained, which permits the vehicle handling and speed to be maintained or restored quickly when the excessive slipping and/or lateral skid conditions are removed. Also, should a minor slipping and/or lateral skid condition be experienced or anticipated (i. e., one that is close to the threshold. of TCS and/or VSA activation), then the TCS ECU and/or VSA ECU 19 may respond by only activating the associated drive torque actuator via the drive torque ECU. In many cases, this reduction in drive torque at only the slipping and/or laterally skidding wheel will alleviate the slipping and/or laterally skidding problem before a more severe slipping and/or laterally skidding condition. is experienced and without detrimentally affecting the performance of the vehicle.

Naturally, it is considered apparent that the remedial measures for moderate slipping and/or laterally skidding situations may be adjusted or altered so that, instead of applying the brakes, the throttle angle is adjusted. It is believed that reducing drive torque and adjusting the throttle angle in moderate slipping and/or laterally skidding situations may be preferred in some control strategies.

With reference to Figs. 6a and 6b, a cooperative traction control system 310 according to a second embodiment of the present invention is illustrated. The cooperative traction control system 310 is installed on a vehicle having a plurality of wheels 312 and vehicle parameter sensors including wheel speed sensors 314, and/or vehicle motion sensors 313 (typically yaw rate, lateral g, longitudinal G, and steering angle). The cooperative traction control system 310 also includes brakes 316 associated with each wheel 312, a TCS ECU 318 and/or VSA ECU 319, a drive torque actuator 320 associated with each of the wheels 312, a drive torque ECU 322, an engine ECU 324, a communications bus 326, and a controllable suspension 317 that determines individual wheel loads.

The TCS ECU 318 and/or VSA ECU 319 is in communication with the brakes 316 of each wheel 312 (i. e., the brake actuators), and with the drive torque ECU 322 and the engine ECU 324 via the communications bus 326, as illustrated.

The TCS ECU 318 and/or VSA ECU 319 receives signals from the wheel speed sensors 314, and/or vehicle motion sensors and uses these signals to determine wheel speed changes and vehicle motion changes. The wheel speed changes and vehicle motion changes are compared to stability operational boundaries in the TCS ECU 318 and/or VSA ECU 319 to determine whether one or more wheels 312 are slipping and/or skidding laterally or about to slip and/or skid laterally, or if the vehicle is progressing into a region of unstable motion and whether the actual or anticipated wheel slip and/or lateral skid needs to be reduced. It is noted that many algorithms are known in the art to qualify and quantify wheel slip and/or lateral skid and/or unstable vehicle motion and that many of these known algorithms may be used by the TCS ECU 318 and/or VSA ECU 319.

The TCS ECU 318 and/or VSA ECU 319 also receives signals from the controllable suspension 317 on the vehicle. The controllable suspension 317 determines or calculates individual wheel loads from a vehicle in motion. The controllable suspension 317 includes variable damping control in combination with non-controlled spring force components. The wheel loads are compared to stability operational boundaries in the TCS ECU 318 and/or VSA ECU 319 to determine whether one or more wheels 312 are about to slip and/or skid laterally or if the vehicle is progressing into a region of unstable motion, and whether the anticipated wheel slip and/or lateral skid needs to be reduced. Again, many algorithms are known in the art to qualify and quantify potential wheel slip and/or lateral skid and/or unstable vehicle motion, and that many of these known algorithms may be used by the TCS ECU 318 and/or VSA ECU 319. Alternatively, the TCS ECU 318 and/or VSA ECU 319 uses the suspension load information in combination with wheel slip and/or lateral skid and/or vehicle motion information and other sensed conditions as described below.

The TCS ECU 318 and/or VSA ECU 319 uses the wheel slip and/or lateral skid information either alone or in combination with other sensed conditions (i.e., steering angle, temperature, pitch/yaw) to calculate control signals that may be used to control operation of the vehicle drive/brake systems to correct the wheel slip and/or lateral skid, as described hereinafter. More specifically, the TCS ECU 318 and/or VSA ECU 319 calculates: a drive torque reduction amount that may be communicated to the drive torque ECU 322 to control the drive torque actuator(s) 320; a brake torque (braking force) that may be communicated to each of the brakes 316 to modulate/actuate the brakes; and, a throttle angle change request that may be communicated to the engine ECU 324 to control operation of the engine. In this regard it is noted that the condition or position of the throttle is communicated from the engine ECU 324 to the TCS ECU 318 and/or VSA ECU 319via the communications bus 326, and that the condition of the individual drive torque actuators 320 is communicated from the drive torque ECU 322 to the TCS ECU 318 and/or VSA ECU 319.

The drive torque ECU 322 receives drive torque reduction signals from the TCS ECU 318 and/or VSA ECU 319 and controls operation of the individual drive torque actuators 320. The drive torque actuators 320 are generally designed and intended to achieve an appropriate level of drive torque for each wheel 312 as required by the prevailing vehicle condition, and may have their own feed-forward and feed-back control. However, as surface, loading, speed and other vehicle conditions change, there is an opportunity to have individual wheel slip and/or lateral skid that leads to loss of traction and/or even loss of vehicle stability or maneuverability. Therefore, control over the individual drive torque actuators 320 via the TCS ECU 318 and/or VSA ECU 319 and the drive torque ECU 322 is preferably employed, as should be apparent from the present discussion.

The engine ECU 324 is adapted to control or adjust the throttle and thereby affects the engine output torque. The engine ECU 324 receives the throttle angle change request signals from the TCS ECU 318 and/or VSA ECU 319 and implements adjustments to the throttle angle, and communicates the throttle angle status to the TCS ECU 318 and/or VSA ECU 319.

With reference to Fig. 7, a flow chart illustrating a first preferred method of operating the cooperative traction control system 310 according to the second embodiment of the present invention is provided. In this method the cooperative traction control system provides a staged actuation of control systems to reduce potential wheel slip and/or lateral skid and actual wheel slip and/or lateral skid, as necessary.

In step 390, the controllable suspension is monitored and, in step 392, it is determined that potential wheel slipping and/or lateral skidding is occurring.

Thereafter, in step 394, the TCS ECU 118 and/or VSA ECU 319 communicates the necessary drive torque reduction amount to the drive torque ECU 122, which, in turn, activate the associated drive torque actuator 120 for the wheel that is about to slip and/or skid laterally to reduce the drive torque applied to that wheel.

In step 400, the wheels and vehicle motions are monitored and, in step 402, it is determined that a wheel is slipping and/or laterally skidding and/or the vehicle is progressing into a region of unstable motion. Thereafter, in step 404, the TCS ECU 318 and/or VSA ECU 319 communicates the necessary drive torque reduction amount to the drive torque ECU 322, which, in turn, activates the associated drive torque actuator 320 for the slipping and/or laterally skidding wheel to reduce the drive torque applied to the slipping and/or laterally skidding wheel. The slipping and/or laterally skidding condition of the wheels is sensed (step 406) and, should it be determined that the subject wheel continues to slip and/or skid laterally, then the TCS ECU 318 and/or VSA ECU 319 modulates or activates the brakes 316 at each wheel 312 (step 408), further reducing the wheel speed. The wheel slipping and/or lateral skid condition is further sensed (step 410) and, should it be determined that the subject wheel continues to slip and/or skid laterally, then the TCS ECU 318 and/or VSA ECU 319 communicates the throttle angle change request to the engine ECU 324, which adjusts the throttle angle to reduce the engine torque output (step 412). The slipping condition is further monitored (step 414) and the control is applied until excessive slipping and/or laterally skidding is no longer sensed or anticipated.

With reference to Fig. 8, a flow chart illustrating a second preferred method of operating the cooperative traction control system 310 according to the second embodiment of the present invention is provided. This embodiment is similar to the embodiment of Fig. 7, but reverses the order of the sequential application of remedial measures when actual wheel slipping and/or lateral skidding is detected, as will be apparent from the following discussion.

In step 440, the controllable suspension is monitored and, in step 442, it is determined that potential wheel slipping and/or lateral skidding is occurring.

Thereafter, in step 444, the TCS ECU 318 and/or VSA ECU 319 communicates the necessary drive torque reduction amount to the drive torque ECU 322, which, in turn, activate the associated drive torque actuator 320 for the wheel that is about to slip and/or skid laterally to reduce the drive torque applied to that wheel.

In step 450, the wheels and vehicle motions are monitored and, in step 452 it is determined that a wheel is slipping and/or skidding laterally. Thereafter, in step 454, the TCS ECU 318 and/or VSA ECU 319 communicates the necessary drive torque reduction amount to the drive torque ECU 322, which, in turn, activates the associated drive torque actuator 320 for the slipping and/or laterally skidding wheel to reduce the drive torque applied to the slipping and/or laterally skidding wheel. The wheel slipping and/or lateral skid condition is further sensed (step 456) and, should it be determined that the subject wheel continues to slip and/or skid laterally, then the TCS ECU 318 and/or VSA ECU 319 communicates the throttle angle change request to the engine ECU 324, which adjusts the throttle angle to reduce the engine torque output (step 458). The slipping and/or lateral skid condition of the wheels is sensed (step 460) and, should it be determined that the subject wheel continues to excessively slip and/or skid laterally, then the TCS ECU 318 and/or VSA ECU 319 modulates or activates the brakes 316 at each wheel 312 (step 462), further reducing the wheel speed. The slipping and/or lateral skid condition is further monitored (step 464) and the control is applied until excessive slipping and/or lateral skidding is no longer sensed or anticipated.

With reference to Fig. 9, a flow chart illustrating another preferred method of operating the cooperative traction control system 310 according to the second embodiment of the present invention is provided. In this method, the cooperative traction control system 310 provides remedial measures based upon the sensed or calculated severity of the wheel slippage and/or lateral skid.

In step 590, the controllable suspension is monitored and, in step 592, it is determined that potential wheel slipping and/or lateral skidding and/or progression of the vehicle into a region of unstable motion is occurring. Thereafter, in step 594, the TCS ECU 318 and/or VSA ECU 319 communicates the necessary drive torque reduction amount to the drive torque ECU 322, which, in turn, activates the associated drive torque actuator 320 for the wheel that is about to slip and/or skid laterally to reduce the drive torque applied to that wheel.

In step 600, the wheels and/or vehicle motions are monitored and, should excessive wheel slipping and/or lateral skidding be sensed or anticipated (step 602), the TCS ECU 318 and/or VSA ECU 319 determines the severity of the sensed or anticipated wheel slippage and/or lateral skid (step 604). If the wheel slipping and/or lateral skidding situation is determined to be minor in step 604; then the associated drive torque actuator (s) is activated (step 606). If the wheel slipping and/or lateral skidding situation is determined to be moderate in step 604, then the associated drive torque actuator (s) and the brakes are simultaneously activated (step 608). If the wheel slipping and/or lateral skidding situation is determined to be severe in step 604, then simultaneously the associated drive torque actuators 320 are activated, the brakes are activated, and the throttle angle is adjusted to reduce engine torque output (step 610). Naturally, following any of the remedial steps (steps 606,608, 610) the wheel slipping and/or lateral skidding condition is sensed (steps 612,614, 616) and, if acceptable slipping and/or lateral skidding is occurring or anticipated, the suspension load is monitored (step 590). If wheel slipping and/or lateral skidding is anticipated, the control returns attempt to prevent excessive slippage and/or lateral skid by adjusting associated drive torque.

In this method, for minor or moderate sensed wheel slipping and/or lateral skidding situations, the engine output torque is maintained, which permits the vehicle handling and speed to be maintained or restored quickly when the excessive slipping and/or lateral skidding conditions are removed. Also, should a minor slipping and/or skidding condition be experienced, then the TCS ECU 318 and/or VSA ECU 319 may respond by only activating the associated drive torque actuator via the drive torque ECU 322. In many cases, this reduction in drive torque at only the slipping and/or laterally skidding wheel will alleviate the slipping and/or laterally skidding problem before a more severe slipping and/or laterally skidding condition is experienced and without detrimentally affecting the performance of the vehicle.

Naturally, it is consider.ed apparent that the remedial measures for moderate slipping and/or laterally skidding situations may be adjusted or altered so that, instead of applying the brakes, the throttle angle is adjusted. It is believed that reducing drive torque and adjusting the throttle angle in moderate slipping and/or laterally skidding situations may be preferred in some control strategies.

In accordance with the present invention, enhancements to the brake- based controller now include: . Ability to calculate the required drive torque reduction amount, . Ability to send a commanded drive torque reduction amount to an electronically controlled drive torque device (for each controlled wheel), . Ability to receive status information regarding the execution of the command of the electronically controlled drive torque device; and # Ability to receive load information from a controllable vehicle suspension and use the information in a feed forward manner to adjust the commanded drive torque reduction amount.

Further, in the present invention the controlled drive torque actuator now has the following responsibilities to respond to the TCS ECU's and/or VSA ECU's requests: # Ability to receive a commanded drive torque reduction signal from the TCS ECU and/or VSA ECU via the drive torque ECU, Ability to decide the priority of the TCS ECU's and/or VSA ECU's command signal in coordination with other areas of the driving torque control, # Ability to request and control the required change in drive torque based on the two above actions.

As noted previously, the main operational enhancement of this invention relates to, but is not limited to, operation on low coefficient surfaces during turning and hard acceleration. During vehicle launch on low coefficient surfaces and while turning in particular, there is a higher likelihood of loss of traction and potentially ensuing loss of yaw stability and/or vehicle maneuverability. The present invention, as noted hereinbefore, eliminates or reduces the problems encountered with the prior art systems by controlling drive torque at the slipping and/or laterally skidding wheel, either alone or in combination with other slip-reducing, lateral skid-reducing and stable vehicle motion-enhancing control schemes.

Although the invention has been shown and described with reference to certain preferred and alternate embodiments, the invention is not limited to these specific embodiments. Minor variations and insubstantial differences in the various combinations of materials and methods of application may occur to those of ordinary skill in the art while remaining within the scope of the invention as claimed and equivalents.

## Claims

1. A cooperative traction control system (10,310) for controlling a vehicle having a plurality of wheels (12,312), comprising:
- a plurality of vehicle parameter sensors (13,14,313,314);
- a plurality of drive torque actuators (20,320) capable of modulating the amount of drive torque at a given wheel (12,312), each of said drive torque actuators (20,320) being associated with one of said wheels (12,312); and,
- a controller that receives signals from said vehicle parameter sensors (13,14,313,314) and determines whether any of said wheels (12,312) are longitudinally slipping or laterally skidding
- wherein, when said controller determines, based upon said signals that one of said wheels (12,312) is slipping longitudinally and/or skidding laterally or is expected to slip longitudinally and/or skid laterally, the drive torque actuator (20,320) associated with said one of said wheels (12,312) is activated to reduce the drive torque delivered to said one of said wheels (12,312).

2. The cooperative traction control system (10,310) according to claim 1, wherein said vehicle parameter sensors (13,14,313,314) are wheel sensors (14,314) associated on at least one of the vehicle wheels (12,312); said signals from said wheel sensors (14,314) are wheel speed signals; and said controller includes a traction control system electronic control unit (18,318) and a drive torque electronic control unit (22,322), said traction control system electronic control unit (18,318) receives the wheel speed signals and determines whether one of said wheels (12,312) is slipping, and wherein said drive torque electronic control unit controls (22,322) said drive torque actuators (20,320) in response to control signals from said traction control system electronic control unit (18,318).

3. The cooperative traction control system (10,310) according to claim 1, wherein said vehicle parameter sensors (13,14,313,314) are both: wheel sensors (14,314) associated on at least one of the vehicle wheels (12,312), and vehicle motion sensors (13,313); said signals from said vehicle motion sensors (13,313) are vehicle motion signals and said signals from said vehicle wheel sensors (14,314) are wheel speed signals; and said controller includes a vehicle stability assist system electronic control unit (19,319), a traction control system electronic control unit (18,318) and a drive torque electronic control unit (22,322), said traction control system electronic control unit (18,318) and vehicle stability assist system electronic control unit (19,319) receiving the vehicle motion signals and wheel speed signals and determines whether one of said wheels (12,312) is slipping longitudinally and/or skidding laterally, and wherein said drive torque electronic control unit controls (22,322) said drive torque actuators (20,320) in response to control signals from said traction control system electronic control unit (18,318) and vehicle stability assist system electronic control unit (19,319).

4. The cooperative traction control system (10,310) according to claim 1, wherein said vehicle parameter sensors (13,14,313,314) are vehicle motion sensors (13,313); said signals from said vehicle motion sensors (13,313) are vehicle motion signals; and said controller includes a vehicle stability assist system electronic control unit (19,319) and a drive torque electronic control unit (22,322), said vehicle stability assist system electronic control unit (19,319) receiving the vehicle motion signals and determines whether one of said wheels (12,312) is skidding laterally and/or the vehicle is progressing into a region of unstable motion, and wherein said drive torque electronic control unit (22,322) controls said drive torque actuators (20,320) in response to control signals from said vehicle stability assist system electronic control unit (19,319).

5. The cooperative traction control system (10,310) according to claim 1, wherein said system further comprises a plurality of brakes (16,316), each of said plurality of brakes (16,316) being associated with one of said plurality of wheels (12,312), and wherein when one of said wheels (12,312) is slipping longitudinally and/or slipping laterally or is expected to slip longitudinally and/or skid laterally, said brakes (16,316) are actuated.

6. The cooperative traction control system (10,310) according to claim 1, wherein said system further comprises an engine electronic control unit (24,324) that is operable to adjust a throttle angle of said engine, and wherein, when one of said wheels (12,312) is slipping longitudinally and/or skidding laterally or is expected to slip longitudinally and/or skid laterally, said engine electronic control unit (24,324) is activated to adjust the throttle angle to reduce engine torque output.

7. The cooperative traction control system (10,310) according to claim 5, wherein said system further comprises an engine electronic control unit (24,324) that is operable to adjust a throttle angle of said engine, and wherein, when one of said wheels (12,312) is slipping longitudinally and/or skidding laterally or is expected to slip longitudinally and/or skid laterally, said engine electronic control unit (24,324) is activated to adjust the throttle angle to reduce engine torque output.

8. The cooperative traction control system (10,310) according to claim 7, wherein actuation of said drive torque actuator (20,320), actuation of said brakes (16,316), and adjustment of said throttle angle occurs substantially simultaneously.

9. The cooperative traction control system according to claim 7, wherein actuation of said drive torque actuator (20,320), actuation of said brakes (16,316), and adjustment of said throttle angle occurs sequentially.

10. The cooperative traction control system (10,310) according to claim 3, wherein said system further comprises a plurality of brakes (16,316), each of said plurality of brakes (16,316) being associated with one of said plurality of wheels (12,312), and wherein when one of said wheels (12,312) is slipping longitudinally and/or skidding laterally or is expected to slip longitudinally and/or skid laterally, said brakes (16,316) are actuated.

11. The cooperative traction control system (10,310) according to claim 3, wherein said system further comprises an engine electronic control unit (24,324) that is operable to adjust a throttle angle of said engine, and wherein, when one of said wheels (12,312) is slipping longitudinally and/or skidding laterally or is expected to slip longitudinally and/or skid laterally, said engine electronic control unit (24,324) is activated to adjust the throttle angle to reduce engine torque output.

12. The cooperative traction control system (10,310) according to claim 10, wherein said system further comprises an engine electronic control unit (24,324) that is operable to adjust a throttle angle of said engine, and wherein, when one of said wheels (12,312) is slipping longitudinally and/or skidding laterally or is expected to slip longitudinally and/or skid laterally, said engine electronic control unit (24,324) is activated to adjust the throttle angle to reduce engine torque output.

13. The cooperative traction control system (10,310) according to claim 12, wherein actuation of said drive torque actuator (20,320), actuation of said brakes (16,316), and adjustment of said throttle angle occurs substantially simultaneously.

14. The cooperative traction control system (10,310) according to claim 12, wherein actuation of said drive torque actuator (20,320), actuation of said brakes (16,316), and adjustment of said throttle angle occurs sequentially.

15. A method for controlling a vehicle having a plurality of wheels (12,312), comprising the steps of:
- monitoring a speed of said wheels (12,312);
- determining whether one of said wheels (12,312) is slipping and/or skidding laterally or is expected to slip and/or skid laterally;
- determining a severity of said slipping and/or lateral skidding or expected slipping and/or lateral skidding of said one of said wheels (12,312); and,
- controlling a drive torque actuator (20,320) associated with said one of said wheels (12,312) and being capable of modulating the amount of drive torque at a given wheel, in accordance with a predetermined procedure based upon the determined severity of said slipping and/or lateral skidding or expected slipping and/or lateral skidding so as to reduce said slipping and/or lateral skidding of said one of said wheels (12,312).

16. The method according to claim 15 further comprising the step of controlling a brake (16,316) associated with said one of said wheels (12,312) and/or an engine throttle angle in accordance with a predetermined procedure based upon the determined severity of said slipping and/or lateral skidding or expected slipping and/or lateral skidding so as to reduce said slipping and/or lateral skidding of said one of said wheels (12,312).

17. The method according to claim 15, wherein, when said slipping and/or lateral skidding or expected slipping and/or lateral skidding is determined to be minor, said drive torque actuator (20,320) associated with said one of said wheels (12,312) is operated to reduce a drive torque provided to said one of said wheels (12,312).

18. The method according to claim 16, wherein, when said slipping and/or lateral skidding or expected slipping and/or lateral skidding is determined to be moderate, said drive torque actuator (20,320) and said brake (16,316) associated with said one of said wheels (12,312) are simultaneously operated to reduce a drive torque provided to said one of said wheels (12,312) and to slow said one of said wheels (12,312).

19. The method according to claim 15, wherein, when said slipping and/or lateral skidding or expected slipping and/or lateral skidding is determined to be moderate, said throttle angle is controlled to reduce engine output torque and said drive torque actuator (20,320) is operated to reduce a drive torque provided to said one of said wheels (12,312), wherein said one of said wheels (12,312) is slowed.

20. The method according to claim 16, wherein, when said slipping and/or lateral skidding or expected slipping and/or lateral skidding is determined to be severe, said drive torque actuator (20,320) and said brake (16,316) associated with said one of said wheels (12,312) are simultaneously operated to reduce a drive torque provided to said one of said wheels (12,312) and to slow said one of said wheels (12,312) while said throttle angle of said engine is controlled to reduce an engine output torque.

21. The method according to claim 17, wherein, when said slipping and/or lateral skidding or expected slipping and/or lateral skidding is determined to be moderate, said drive torque actuator (20,320) and said brake (16,316) associated with said one of said wheels (12,312) are simultaneously operated to reduce a drive torque provided to said one of said wheels (12,312) and to slow said one of said wheels (12,312).

22. The method according to claim 21, wherein, when said slipping and/or lateral skidding or expected slipping and/or lateral skidding is determined to be severe, said drive torque actuator (20,320) and said brake (16,316) associated with said one of said wheels (12,312) are simultaneously operated to reduce a drive torque provided to said one of said wheels (12,312) and to slow said one of said wheels (12,312) while said throttle angle of said engine is controlled to reduce an engine output torque.

## Patentansprüche

1. Kooperatives Antriebsschlupfregelungssystem (10, 310) zur Steuerung eines Fahrzeug mit mehreren Rädern (12, 312), welches umfasst:
- mehrere Fahrzeugparametersensoren (13, 14, 313, 314);
- mehrere Antriebsdrehmoment-Aktuatoren (20, 320), die in der Lage sind, den Betrag des Antriebsdrehmoments an einem gegebenen Rad (12, 312) zu modulieren, wobei jeder der Antriebsdrehmoment-Aktuatoren (20, 320) einem der Räder (12, 312) zugeordnet ist; und
- eine Steuereinrichtung, welche Signale von den Fahrzeugparametersensoren (13, 14, 313, 314) empfängt und bestimmt, ob irgendeines der Räder (12, 312) in Längsrichtung durchrutscht oder seitlich ausbricht,
- wobei, wenn die Steuereinrichtung auf der Basis dieser Signale bestimmt, dass eines der Räder (12, 312) in Längsrichtung durchrutscht und/oder seitlich ausbricht oder zu erwarten ist, dass es in Längsrichtung durchrutscht und/oder seitlich ausbricht, der diesem einen der Räder (12, 312) zugeordnete Antriebsdrehmoment-Aktuator (20, 320) aktiviert wird, um das diesem einen der Räder (12, 312) zugeführte Antriebsdrehmoment zu verringern.

2. Kooperatives Antriebsschlupfregelungssystem (10, 310) nach Anspruch 1, wobei die Fahrzeugparametersensoren (13, 14, 313, 314) Radsensoren (14, 314) sind, die mindestens einem der Fahrzeugräder (12, 312) zugeordnet sind; die Signale von den Radsensoren (14, 314) Raddrehzahlsignale sind; und die Steuereinrichtung eine elektronische Steuereinheit (18, 318) der Antriebsschlupfregelung und eine elektronische Steuereinheit (22, 322) des Antriebsdrehmoments enthält, die elektronische Steuereinheit (18, 318) der Antriebsschlupfregelung die Raddrehzahlsignale empfängt und bestimmt, ob eines der Räder (12, 312) rutscht, und wobei die elektronische Steuereinheit (22, 322) des Antriebsdrehmoments die Antriebsdrehmoment-Aktuatoren (20, 320) in Reaktion auf Steuersignale von der elektronischen Steuereinheit (18, 318) der Antriebsschlupfregelung steuert.

3. Kooperatives Antriebsschlupfregelungssystem (10, 310) nach Anspruch 1, wobei die Fahrzeugparametersensoren (13, 14, 313, 314) sowohl Radsensoren (14, 314), die mindestens einem der Fahrzeugräder (12, 312) zugeordnet sind, als auch Fahrzeugbewegungssensoren (13, 313) sind; die Signale von den Fahrzeugbewegungssensoren (13, 313) Fahrzeugbewegungssignale sind und die Signale von den Fahrzeugradsensoren (14, 314) Raddrehzahlsignale sind; und die Steuereinrichtung eine elektronische Steuereinheit (19, 319) eines Fahrzeugstabilitäts-Assistenzsystems (Vehicle Stability Assist System), eine elektronische Steuereinheit (18, 318) der Antriebsschlupfregelung und eine elektronische Steuereinheit (22, 322) des Antriebsdrehmoments enthält, die elektronische Steuereinheit (18, 318) der Antriebsschlupfregelung und die elektronische Steuereinheit (19, 319) des Fahrzeugstabilitäts-Assistenzsystems die Fahrzeugbewegungssignale und Raddrehzahlsignale empfangen und bestimmen, ob eines der Räder (12, 312) in Längsrichtung durchrutscht und/oder seitlich ausbricht, und wobei die elektronische Steuereinheit (22, 322) des Antriebsdrehmoments die Antriebsdrehmoment-Aktuatoren (20, 320) in Reaktion auf Steuersignale von der elektronischen Steuereinheit (18, 318) der Antriebsschlupfregelung und der elektronischen Steuereinheit (19, 319) des Fahrzeugstabilitäts-Assistenzsystems steuert.

4. Kooperatives Antriebsschlupfregelungssystem (10, 310) nach Anspruch 1, wobei die Fahrzeugparametersensoren (13, 14, 313, 314) Fahrzeugbewegungssensoren (13, 313) sind; die Signale von den Fahrzeugbewegungssensoren (13, 313) Fahrzeugbewegungssignale sind; und die Steuereinrichtung eine elektronische Steuereinheit (19, 319) eines Fahrzeugstabilitäts-Assistenzsystems (Vehicle Stability Assist System) und eine elektronische Steuereinheit (22, 322) des Antriebsdrehmoments enthält, die elektronische Steuereinheit (19, 319) des Fahrzeugstabilitäts-Assistenzsystems die Fahrzeugbewegungssignale empfängt und bestimmt, ob eines der Räder (12, 312) seitlich ausbricht und/oder das Fahrzeug sich in einen Bereich instabiler Bewegung bewegt, und wobei die elektronische Steuereinheit (22, 322) des Antriebsdrehmoments die Antriebsdrehmoment-Aktuatoren (20, 320) in Reaktion auf Steuersignale von der elektronischen Steuereinheit (19, 319) des Fahrzeugstabilitäts-Assistenzsystems steuert.

5. Kooperatives Antriebsschlupfregelungssystem (10, 310) nach Anspruch 1, wobei das System ferner mehrere Bremsen (16, 316) umfasst, wobei jede der mehreren Bremsen (16, 316) einem der mehreren Räder (12, 312) zugeordnet ist, und wobei, wenn eines der Räder (12, 312) in Längsrichtung durchrutscht und/oder seitlich ausbricht oder zu erwarten ist, dass es in Längsrichtung durchrutscht und/oder seitlich ausbricht, die Bremsen (16, 316) betätigt werden.

6. Kooperatives Antriebsschlupfregelungssystem (10, 310) nach Anspruch 1, wobei das System ferner eine elektronische Steuereinheit (24, 324) des Motors umfasst, welche dafür ausgebildet ist, einen Drosselklappenwinkel des Motors einzustellen, und wobei, wenn eines der Räder (12, 312) in Längsrichtung durchrutscht und/oder seitlich ausbricht oder zu erwarten ist, dass es in Längsrichtung durchrutscht und/oder seitlich ausbricht, die elektronische Steuereinheit (24, 324) des Motors aktiviert wird, um den Drosselklappenwinkel einzustellen, um das Ausgangsdrehmoment des Motors zu verringern.

7. Kooperatives Antriebsschlupfregelungssystem (10, 310) nach Anspruch 5, wobei das System ferner eine elektronische Steuereinheit (24, 324) des Motors umfasst, welche dafür ausgebildet ist, einen Drosselklappenwinkel des Motors einzustellen, und wobei, wenn eines der Räder (12, 312) in Längsrichtung durchrutscht und/oder seitlich ausbricht oder zu erwarten ist, dass es in Längsrichtung durchrutscht und/oder seitlich ausbricht, die elektronische Steuereinheit (24, 324) des Motors aktiviert wird, um den Drosselklappenwinkel einzustellen, um das Ausgangsdrehmoment des Motors zu verringern.

8. Kooperatives Antriebsschlupfregelungssystem (10, 310) nach Anspruch 7, wobei die Betätigung des Antriebsdrehmoment-Aktuators (20, 320), die Betätigung der Bremsen (16, 316) und die Einstellung des Drosselklappenwinkels im Wesentlichen gleichzeitig erfolgen.

9. Kooperatives Antriebsschlupfregelungssystem nach Anspruch 7, wobei die Betätigung des Antriebsdrehmoment-Aktuators (20, 320), die Betätigung der Bremsen (16, 316) und die Einstellung des Drosselklappenwinkels nacheinander erfolgen.

10. Kooperatives Antriebsschlupfregelungssystem (10, 310) nach Anspruch 3, wobei das System ferner mehrere Bremsen (16, 316) umfasst, wobei jede der mehreren Bremsen (16, 316) einem der mehreren Räder (12, 312) zugeordnet ist, und wobei, wenn eines der Räder (12, 312) in Längsrichtung durchrutscht und/oder seitlich ausbricht oder zu erwarten ist, dass es in Längsrichtung durchrutscht und/oder seitlich ausbricht, die Bremsen (16, 316) betätigt werden.

11. Kooperatives Antriebsschlupfregelungssystem (10, 310) nach Anspruch 3, wobei das System ferner eine elektronische Steuereinheit (24, 324) des Motors umfasst, welche dafür ausgebildet ist, einen Drosselklappenwinkel des Motors einzustellen, und wobei, wenn eines der Räder (12, 312) in Längsrichtung durchrutscht und/oder seitlich ausbricht oder zu erwarten ist, dass es in Längsrichtung durchrutscht und/oder seitlich ausbricht, die elektronische Steuereinheit (24, 324) des Motors aktiviert wird, um den Drosselklappenwinkel einzustellen, um das Ausgangsdrehmoment des Motors zu verringern.

12. Kooperatives Antriebsschlupfregelungssystem (10, 310) nach Anspruch 10, wobei das System ferner eine elektronische Steuereinheit (24, 324) des Motors umfasst, welche dafür ausgebildet ist, einen Drosselklappenwinkel des Motors einzustellen, und wobei, wenn eines der Räder (12, 312) in Längsrichtung durchrutscht und/oder seitlich ausbricht oder zu erwarten ist, dass es in Längsrichtung durchrutscht und/oder seitlich ausbricht, die elektronische Steuereinheit (24, 324) des Motors aktiviert wird, um den Drosselklappenwinkel einzustellen, um das Ausgangsdrehmoment des Motors zu verringern.

13. Kooperatives Antriebsschlupfregelungssystem (10, 310) nach Anspruch 12, wobei die Betätigung des Antriebsdrehmoment-Aktuators (20, 320), die Betätigung der Bremsen (16, 316) und die Einstellung des Drosselklappenwinkels im Wesentlichen gleichzeitig erfolgen.

14. Kooperatives Antriebsschlupfregelungssystem (10, 310) nach Anspruch 12, wobei die Betätigung des Antriebsdrehmoment-Aktuators (20, 320), die Betätigung der Bremsen (16, 316) und die Einstellung des Drosselklappenwinkels nacheinander erfolgen.

15. Verfahren zur Steuerung eines Fahrzeug mit mehreren Rädern (12, 312), welches die folgenden Schritte umfasst:
- Überwachen einer Drehzahl der Räder (12, 312);
- Bestimmen, ob eines der Räder (12, 312) rutscht und/oder seitlich ausbricht oder zu erwarten ist, dass es rutscht und/oder seitlich ausbricht;
- Bestimmen einer Schwere des Rutschens und/oder seitlichen Ausbrechens oder zu erwartenden Rutschens und/oder seitlichen Ausbrechens des einen der Räder (12, 312); und
- Steuern eines Antriebsdrehmoment-Aktuators (20, 320), der dem einen der Räder (12, 312) zugeordnet ist und in der Lage ist, den Betrag des Antriebsdrehmoments an einem gegebenen Rad zu modulieren, entsprechend einer vorbestimmten Verfahrensweise auf der Basis der bestimmten Schwere des Rutschens und/oder seitlichen Ausbrechens oder zu erwartenden Rutschens und/oder seitlichen Ausbrechens, so dass das Rutschen und/oder seitliche Ausbrechen des einen der Räder (12, 312) verringert wird.

16. Verfahren nach Anspruch 15, welches ferner den Schritt des Steuerns einer Bremse (16, 316), die dem einen der Räder (12, 312) zugeordnet ist, und/oder eines Drosselklappenwinkels des Motors entsprechend einer vorbestimmten Verfahrensweise auf der Basis der bestimmten Schwere des Rutschens und/oder seitlichen Ausbrechens oder zu erwartenden Rutschens und/oder seitlichen Ausbrechens umfasst, so dass das Rutschen und/oder seitliche Ausbrechen des einen der Räder (12, 312) verringert wird.

17. Verfahren nach Anspruch 15, wobei, wenn das Rutschen und/oder seitliche Ausbrechen oder zu erwartende Rutschen und/oder seitliche Ausbrechen als geringfügig bestimmt wird, der dem einen der Räder (12, 312) zugeordnete Antriebsdrehmoment-Aktuator (20, 320) betätigt wird, um ein Antriebsdrehmoment, das dem einen der Räder (12, 312) zugeführt wird, zu verringern.

18. Verfahren nach Anspruch 16, wobei, wenn das Rutschen und/oder seitliche Ausbrechen oder zu erwartende Rutschen und/oder seitliche Ausbrechen als mäßig bestimmt wird, der Antriebsdrehmoment-Aktuator (20, 320) und die Bremse (16, 316), die dem einen der Räder (12, 312) zugeordnet sind, gleichzeitig betätigt werden, um ein Antriebsdrehmoment, das dem einen der Räder (12, 312) zugeführt wird, zu verringern und das eine der Räder (12, 312) zu verlangsamen.

19. Verfahren nach Anspruch 15, wobei, wenn das Rutschen und/oder seitliche Ausbrechen oder zu erwartende Rutschen und/oder seitliche Ausbrechen als mäßig bestimmt wird, der Drosselklappenwinkel gesteuert wird, um ein Ausgangsdrehmoment des Motors zu verringern, und der Antriebsdrehmoment-Aktuator (20, 320) betätigt wird, um ein Antriebsdrehmoment, das dem einen der Räder (12, 312) zugeführt wird, zu verringern, wobei das eine der Räder (12, 312) verlangsamt wird.

20. Verfahren nach Anspruch 16, wobei, wenn das Rutschen und/oder seitliche Ausbrechen oder zu erwartende Rutschen und/oder seitliche Ausbrechen als schwer bestimmt wird, der Antriebsdrehmoment-Aktuator (20, 320) und die Bremse (16, 316), die dem einen der Räder (12, 312) zugeordnet sind, gleichzeitig betätigt werden, um ein Antriebsdrehmoment, das dem einen der Räder (12, 312) zugeführt wird, zu verringern und das eine der Räder (12, 312) zu verlangsamen, während der Drosselklappenwinkel des Motors gesteuert wird, um ein Ausgangsdrehmoment des Motors zu verringern.

21. Verfahren nach Anspruch 17, wobei, wenn das Rutschen und/oder seitliche Ausbrechen oder zu erwartende Rutschen und/oder seitliche Ausbrechen als mäßig bestimmt wird, der Antriebsdrehmoment-Aktuator (20, 320) und die Bremse (16, 316), die dem einen der Räder (12, 312) zugeordnet sind, gleichzeitig betätigt werden, um ein Antriebsdrehmoment, das dem einen der Räder (12, 312) zugeführt wird, zu verringern und das eine der Räder (12, 312) zu verlangsamen.

22. Verfahren nach Anspruch 21, wobei, wenn das Rutschen und/oder seitliche Ausbrechen oder zu erwartende Rutschen und/oder seitliche Ausbrechen als schwer bestimmt wird, der Antriebsdrehmoment-Aktuator (20, 320) und die Bremse (16, 316), die dem einen der Räder (12, 312) zugeordnet sind, gleichzeitig betätigt werden, um ein Antriebsdrehmoment, das dem einen der Räder (12, 312) zugeführt wird, zu verringern und das eine der Räder (12, 312) zu verlangsamen, während der Drosselklappenwinkel des Motors gesteuert wird, um ein Ausgangsdrehmoment des Motors zu verringern.

## Revendications

1. Système de commande de traction coopératif (10, 310) pour commander un véhicule ayant une pluralité de roues (12, 312), comprenant :
- une pluralité de capteurs de paramètres de véhicule (13, 14, 313, 314) ;
- une pluralité d'actionneurs de couple d'entraînement (20, 320) capables de moduler la proportion de couple d'entraînement au niveau d'une roue donnée (12, 312), chacun desdits actionneurs de couple d'entraînement (20, 320) étant associé à une desdites roues (12, 312) ; et
- un contrôleur qui reçoit des signaux provenant desdits capteurs de paramètres de véhicule (13, 14, 313, 314) et détermine si une quelconque desdites roues (12, 312) est en train de déraper longitudinalement ou de patiner latéralement,
- dans lequel, quand ledit contrôleur détermine, sur la base desdits signaux qu'une desdites roues (12, 312) est en train de déraper longitudinalement et/ou de patiner latéralement ou est escomptée déraper longitudinalement et/ou patiner latéralement, l'actionneur de couple d'entraînement (20, 320) associé à l'une desdites roues (12, 312) est activé afin de réduire le couple d'entraînement délivré à l'une desdites roues (12, 312).

2. Système de commande de traction coopératif (10, 310) selon la revendication 1, dans lequel lesdits capteurs de paramètres de véhicule (13, 14, 313, 314) sont des capteurs de roue (14, 314) associées sur au moins une des roues de véhicule (12, 312) ; lesdits signaux provenant desdits capteurs de roue (14, 314) sont des signaux de vitesse de roue ; et ledit contrôleur inclut une unité de commande électronique de système de commande de traction (18, 318) et une unité de commande électronique de couple d'entraînement (22, 322), ladite unité de commande électronique de système de commande de traction (18, 318) reçoit les signaux de vitesse de roue et détermine si une desdites roues (12, 312) est en train de déraper, et dans lequel ladite unité de commande électronique de couple d'entraînement (22, 322) commande lesdites actionneurs de couple d'entraînement (20, 320) en réponse aux signaux de commande provenant de ladite unité de commande électronique de système de commande de traction (18, 318).

3. Système de commande de traction coopératif (10, 310) selon la revendication 1, dans lequel lesdits capteurs de paramètres de véhicule (13, 14, 313, 314) sont à la fois : des capteurs de roue (14, 314) associés sur au moins une des roues de véhicule (12, 312), et des capteurs de mouvement de véhicule (13, 313) ; lesdits signaux provenant desdits capteurs de mouvement de véhicule (13, 313) sont des signaux de mouvement de véhicule et lesdits signaux provenant desdits capteurs de roue de véhicule (14, 314) sont des signaux de vitesse de roue ; et ledit contrôleur inclut une unité de commande électronique de système d'assistance à la stabilité du véhicule (19, 319), une unité de commande électronique de système de commande de traction (18, 318) et une unité de commande électronique de couple d'entraînement (22, 322), ladite unité de commande électronique de système de commande de traction (18, 318) et ladite unité de commande électronique de système d'assistance à la stabilité du véhicule (19, 319) recevant les signaux de mouvement du véhicule et les signaux de vitesse de roue et détermine si une desdites roues (12, 312) est en train de déraper longitudinalement et/ou patiner latéralement, et dans lequel ladite unité de commande électronique de couple d'entraînement (22, 322) commande lesdits actionneurs de couple d'entraînement (20, 320) en réponse aux signaux de commande provenant de ladite unité de commande électronique du système de commande de traction (18, 318) et de ladite unité de commande électronique du système d'assistance à la stabilité du véhicule (19, 319).

4. Système de commande de traction coopératif (10, 310) selon la revendication 1, dans lequel lesdits capteurs de paramètre de véhicule (13, 14, 313, 314) sont des capteurs de mouvement du véhicule (13, 313) ; lesdits signaux provenant desdits capteurs de mouvement du véhicule (13, 313) sont des signaux de mouvement du véhicule ; et ledit contrôleur inclut une unité de commande électronique du système d'assistance à la stabilité du véhicule (19, 319) et une unité de commande électronique de couple d'entraînement (22, 322), ladite unité de commande électronique du système d'assistance à la stabilité du véhicule (19, 319) recevant les signaux de mouvement du véhicule et détermine si une desdites roues (12, 312) est en train de patiner latéralement et/ou le véhicule est en train de progresser vers une région de mouvement instable, et dans lequel ladite unité de commande électronique de couple d'entraînement (22, 322) commande lesdits actionneurs de couple d'entraînement (20, 320) en réponse aux signaux de commande provenant de ladite unité de commande électronique du système d'assistance à la stabilité du véhicule (19, 319).

5. Système de commande de traction coopératif (10, 310) selon la revendication 1, dans lequel ledit système comprend en outre une pluralité de freins (16, 316), chacun de ladite pluralité de freins (16, 316) étant associé à une de ladite pluralité de roues (12, 312) et dans lequel quand une desdites roues (12, 312) est en train de déraper longitudinalement et/ou patiner latéralement ou est escomptée déraper longitudinalement et/ou patiner latéralement, lesdits freins (16, 316) sont actionnés.

6. Système de commande de traction coopératif (10, 310) selon la revendication 1, dans lequel ledit système comprend en outre une unité de commande électronique du moteur (24, 324) qui est opérationnelle afin d'ajuster un angle du papillon des gaz dudit moteur, et dans lequel, quand une desdites roues (12, 312) est en train de déraper longitudinalement et/ou patiner latéralement ou est escomptée déraper longitudinalement et/ou patiner latéralement, ladite unité de commande électronique du moteur (24, 324) est activée afin d'ajuster l'angle du papillon des gaz afin de réduire la sortie de couple du moteur.

7. Système de commande de traction coopératif (10, 310) selon la revendication 5, dans lequel ledit système comprend en outre une unité de commande électronique du moteur (24, 324) qui est opérationnelle afin d'ajuster un angle du papillon des gaz dudit moteur, et dans lequel, quand une desdites roues (12, 312) est en train de déraper longitudinalement et/ou patiner latéralement ou est escomptée déraper longitudinalement et/ou patiner latéralement, ladite unité de commande électronique du moteur (24, 324) est activée afin d'ajuster l'angle du papillon des gaz afin de réduire la sortie de couple du moteur.

8. Système de commande de traction coopératif (10, 310) selon la revendication 7, dans lequel l'actionnement dudit actionneur de couple d'entraînement (20, 320), l'actionnement desdits freins (16, 316) et l'ajustement dudit angle du papillon des gaz ont lieu substantiellement simultanément.

9. Système de commande de traction coopératif selon la revendication 7, dans lequel l'actionnement dudit actionneur de couple d'entraînement (20, 320), l'actionnement desdits freins (16, 316) et l'ajustement dudit angle du papillon des gaz ont lieu séquentiellement.

10. Système de commande de traction coopératif (10, 310) selon la revendication 3, dans lequel ledit système comprend en outre une pluralité de freins (16, 316), chacun de ladite pluralité de freins (16, 316) étant associé à une de ladite pluralité de roues (12, 312), et dans lequel quand une desdites roues (12, 312) est en train de déraper longitudinalement et/ou patiner latéralement ou est escomptée déraper longitudinalement et/ou patiner latéralement, lesdits freins (16, 316) sont actionnés.

11. Système de commande de traction coopératif (10, 310) selon la revendication 3, dans lequel ledit système comprend en outre une unité de commande électronique du moteur (24, 324) qui est opérationnelle afin d'ajuster un angle du papillon des gaz dudit moteur, et dans lequel, quand une desdites roues (12, 312) est en train de déraper longitudinalement et/ou patiner latéralement ou est escomptée déraper longitudinalement et/ou patiner latéralement, ladite unité de commande électronique du moteur (24, 324) est activée afin d'ajuster l'angle du papillon des gaz afin de réduite la sortie de couple du moteur.

12. Système de commande de traction coopératif (10, 310) selon la revendication 10, dans lequel ledit système comprend en outre une unité de commande électronique du moteur (24, 324) qui est opérationnelle afin d'ajuster un angle du papillon des gaz dudit moteur, et dans lequel, quand une desdites roues (12, 312) est en train de déraper longitudinalement et/ou patiner latéralement ou est escomptée déraper longitudinalement et/ou patiner latéralement, ladite unité de commande électronique du moteur (24, 324) est activée afin d'ajuster l'angle du papillon des gaz afin de réduire le couple de sortie du moteur.

13. Système de commande de traction coopératif (10, 310) selon la revendication 12, dans lequel l'actionnement dudit actionneur de couple d'entraînement (20, 320), l'actionnement desdits freins (16, 316) et l'ajustement dudit angle du papillon des gaz ont lieu substantiellement simultanément.

14. Système de commande de traction coopératif (10, 310) selon la revendication 12, dans lequel l'actionnement dudit actionneur de couple d'entraînement (20, 320), l'actionnement desdits freins (16, 316) et l'ajustement dudit angle du papillon des gaz ont lieu séquentiellement.

15. Procédé de commande d'un véhicule ayant une pluralité de roues (12, 312), comprenant les étapes consistant à :
- surveiller une vitesse desdites roues (12, 312) ;
- déterminer si une desdites roues (12, 312) est en train de déraper et/ou patiner latéralement ou est escomptée déraper et/ou patiner latéralement ;
- déterminer une gravité dudit dérapage et/ou patinage latéral ou dérapage et/ou patinage latéral escompté d'une desdites roues (12, 312) ; et
- commander un actionneur de couple d'entraînement (20, 320) associé à l'une desdites roues (12, 312) et étant capable de moduler la proportion de couple d'entraînement au niveau d'une roue donnée, conformément à une procédure prédéterminée sur la base de la gravité déterminée dudit dérapage et/ou patinage latéral ou dérapage et/ou patinage latéral escompté de manière à réduire ledit dérapage et/ou patinage latéral de l'une desdites roues (12, 312).

16. Procédé selon la revendication 15, comprenant en outre l'étape de commande d'un frein (16, 316) associé à l'une desdites roues (12, 312) et/ou un angle de papillon des gaz du moteur conformément à une procédure prédéterminée sur la base de la gravité déterminée dudit dérapage et/ou patinage latéral ou dérapage et/ou patinage latéral escompté de manière à réduite ledit dérapage et/ou patinage latéral de l'une desdites roues (12, 312).

17. Procédé selon la revendication 15, dans lequel, quand ledit dérapage et/ou patinage latéral ou dérapage et/ou patinage latéral escompté est déterminé comme étant mineur, ledit actionneur de couple d'entraînement (20, 320) associé à l'une desdites roues (12, 312) est actionné de manière à réduire un couple d'entraînement fourni à l'une desdites roues (12, 312).

18. Procédé selon la revendication 16, dans lequel, quand ledit dérapage et/ou patinage latéral ou dérapage et/ou patinage latéral escompté est déterminé comme étant modéré, ledit actionneur de couple d'entraînement (20, 320) et ledit frein (16, 316) associé à l'une desdites roues (12, 312) sont actionnés simultanément afin de réduire un couple d'entraînement fourni à l'une desdites roues (12, 312) et ralentir l'une desdites roues (12, 312).

19. Procédé selon la revendication 15, dans lequel, quand ledit dérapage et/ou patinage latéral ou dérapage et/ou patinage latéral escompté est déterminé comme étant modéré, ledit angle du papillon des gaz est commandé afin de réduire le couple de sortie du moteur et ledit actionneur de couple d'entraînement (20, 320) est actionné afin de réduire un couple d'entraînement fourni à l'une desdites roues (12, 312), dans lequel l'une desdites roues (12, 312) est ralentie.

20. Procédé selon la revendication 16, dans lequel, quand ledit dérapage et/ou patinage latéral ou dérapage et/ou patinage latéral escompté est déterminé comme étant grave, ledit actionneur de couple d'entraînement (20, 320) et ledit frein (16, 316) associé à l'une desdites roues (12, 312) sont actionnés simultanément afin de réduire un couple d'entraînement fourni à l'une desdites roues (12, 312) et ralentir l'une desdites roues (12, 312) alors que ledit angle du papillon des gaz dudit moteur est commandé afin de réduire un couple de sortie du moteur.

21. Procédé selon la revendication 17, dans lequel, quand ledit dérapage et/ou patinage latéral ou dérapage et/ou patinage latéral escompté est déterminé comme étant modéré, ledit actionneur de couple d'entraînement (20, 320) et ledit frein (16, 316) associés à l'une desdites roues (12, 312) sont actionnés simultanément afin de réduire un couple d'entraînement fourni à l'une desdites roues (12, 312) et ralentir l'une desdites roues (12, 312).

22. Procédé selon la revendication 21, dans lequel, quand ledit dérapage et/ou patinage latéral ou dérapage et/ou patinage latéral escompté est déterminé comme étant grave, ledit actionneur de couple d'entraînement (20, 320) et ledit frein (16, 316) associé à l'une desdites roues (12, 312) sont actionnés simultanément afin de réduire un couple d'entraînement fourni à l'une desdites roues (12, 312) et ralentir une desdites roues (12, 312) alors que ledit angle du papillon des gaz dudit moteur est commandé afin de réduire un couple de sortie du moteur.
